# EUROPEAN PATENT APPLICATION

(11) **EP 4 438 966 A1**
(43) Date of publication of application: **02.10.2024**
(21) Application number: 22897151.1
(22) Date of filing: 30.06.2022
(51) Int. Cl.: F24F 11/46, F24F 11/64, F24F 11/70, F24F 11/88, H02J 3/00, F24F 11/56, F24F 11/61

(54) **AIR CONDITIONER AND CONTROL METHOD THEREFOR**

(30) Priority: 26.11.2021 CN 202122957787 U; 29.11.2021 CN 202122963954 U; 30.11.2021 CN 202111438794; 30.11.2021 CN 202122978621 U
(71) Applicant: Hisense (Guangdong) Air Conditioning Co., Ltd., Jiangmen, Guangdong 529085 (CN)
(72) Inventor: LI, Xidong, Jiangmen, Guangdong 529085 (CN); WANG, Hongxiang, Jiangmen, Guangdong 529085 (CN); CAO, Yongping, Jiangmen, Guangdong 529085 (CN); ZHANG, Jianneng, Jiangmen, Guangdong 529085 (CN); GUO, Quanli, Jiangmen, Guangdong 529085 (CN)
(74) Representative: Casalonga
(86) International application number: PCT/CN2022/103178
(87) International publication number: WO 2023/093055

(57) **Abstract**

An air conditioner (2). The air conditioner (2) comprises a power supply circuit (10), a power supply adjustment circuit (15), and a power supply control circuit (13). The power supply circuit (10) is coupled to an electric load (11) and is configured to convert an alternating-current power supply (VAC) into a plurality of direct-current power supplies, and the plurality of direct-current power supplies are used for supplying power to the electric load (11). The power supply adjustment circuit (15) is coupled to the power supply circuit (10). The power supply control circuit (13) is coupled to the power supply adjustment circuit (15) and the power supply circuit (10), and is configured to control the conduction angle of the power supply adjustment circuit (15) according to a power supply requirement for the electric load (11), so as to reduce the amplitude of the alternating current input into the power supply circuit (10).

## Description

The present disclosure claims priorities to Chinese Patent application No. 202111438794.6, filed on November 30, 2021, Chinese Patent application No. 202122978621.5, filed on November 30, 2021, Chinese Patent application No. 202122963954.0, filed on November 29, 2021, and Chinese Patent application No. 202122957787.9, filed on November 26, 2021, which are incorporated herein by reference in their entireties.

### TECHNICAL FIELD

The present disclosure relates to the technical field of air conditioning, and in particular, to an air conditioner and a control method thereof.

### BACKGROUND

With an advancement of science and technology and an improvement of people's living standards, air conditioners have gradually entered people's lives and become indispensable products in people's work and life. When the user chooses an air conditioner, energy efficiency parameters of the air conditioner are an important factor for the user to choose the air conditioner.

At present, when calculating overall energy efficiency of the air conditioner, the energy efficiency of the air conditioner during low-power operation accounts for a relatively large proportion.

### SUMMARY

In an aspect, some embodiments of the present disclosure provide an air conditioner. The air conditioner includes a power supply circuit, a power adjustment circuit and a power supply control circuit. The power supply circuit is coupled to an electric load and configured to convert an alternating current power supply into a plurality of direct current power supplies. The plurality of direct current power supplies are used for supplying power to the electric load. The power adjustment circuit is coupled to the power supply circuit. The power supply control circuit is coupled to the power adjustment circuit and the power supply circuit, and configured to control a conduction angle of the power adjustment circuit according to a power supply demand of the electric load, so as to decrease amplitude of an alternating current input to the power supply circuit.

In another aspect, some embodiments of the present disclosure provide a control method of an air conditioner. The air conditioner includes a power supply circuit, a power adjustment circuit and a power supply control circuit. The power supply circuit is coupled to an electric load and configured to convert an alternating current power supply into a plurality of direct current power supplies. The plurality of direct current power supplies are used for supplying power to the electric load. The power adjustment circuit is coupled to the power supply circuit. The power supply control circuit is coupled to the power adjustment circuit and the power supply circuit. The control method of the air conditioner includes: the power supply control circuit controlling a conduction angle of the power adjustment circuit according to a power supply demand of the electric load, so as to decrease amplitude of an alternating current input to the power supply circuit.

### BRIEF DESCRIPTION OF THE DRAWINGS

In order to describe technical solutions of the present disclosure more clearly, the accompanying drawings to be used in some embodiments of the present disclosure will be introduced briefly. However, the accompanying drawings to be described below are merely accompanying drawings of some embodiments of the present disclosure, and a person having ordinary skill in the art may obtain other drawings according to these drawings. In addition, accompanying drawings in the following description may be regarded as schematic diagrams, and are not limitations on an actual size of a product, an actual process of a method and an actual timing of a signal involved in the embodiments of the present disclosure.
FIG. 1 is a block diagram of an air conditioner, in accordance with some embodiments of the present disclosure;
FIG. 2 is a block diagram of a control device of an air conditioner, in accordance with some embodiments of the present disclosure;
FIG. 3 is a circuit diagram of a control device of an air conditioner, in accordance with some embodiments of the present disclosure;
FIG. 4 is a schematic diagram of pulses of a power adjustment circuit, in accordance with some embodiments of the present disclosure;
FIG. 5 is a schematic diagram of pulses of various voltage signals, in accordance with some embodiments of the present disclosure;
FIG. 6 is a flow diagram of a control method of an air conditioner, in accordance with some embodiments of the present disclosure;
FIG. 7 is a circuit diagram of another control device of an air conditioner, in accordance with some embodiments of the present disclosure;
FIG. 8 is a schematic diagram showing a waveform of a relay when operating, in accordance with some embodiments of the present disclosure;
FIG. 9 is a schematic diagram showing a waveform of a motor when operating, in accordance with some embodiments of the present disclosure;
FIG. 10 is a block diagram of another control device of an air conditioner, in accordance with some embodiments of the present disclosure;
FIG. 11 is a schematic diagram of a remote control coding, in accordance with some embodiments of the present disclosure; and
FIG. 12 is a schematic diagram of another remote control coding, in accordance with some embodiments of the present disclosure.

### DETAILED DESCRIPTION

The technical solutions in some embodiments of the present disclosure will be described clearly and completely with reference to the accompanying drawings below. However, the described embodiments are merely some but not all of embodiments of the present disclosure. All other embodiments obtained on a basis of the embodiments of the present disclosure by a person of ordinary skill in the art shall be included in the protection scope of the present disclosure.

Unless the context requires otherwise, throughout the description and claims, the term "comprise" and other forms thereof such as the third-person singular form "comprises" and the present participle form "comprising" are construed as an open and inclusive meaning, i.e., "including, but not limited to". In the description of the specification, the terms such as "one embodiment", "some embodiments", "exemplary embodiments", "example", "specific example" or "some examples" are intended to indicate that specific features, structures, materials or characteristics related to the embodiment(s) or example(s) are included in at least one embodiment or example of the present disclosure. Schematic representations of the above terms do not necessarily refer to the same embodiment(s) or example(s). In addition, specific features, structures, materials, or characteristics described herein may be included in any one or more embodiments or examples in any suitable manner.

Hereinafter, the terms such as "first" and "second" are used for descriptive purposes only, but cannot be construed as indicating or implying the relative importance or implicitly indicating the number of indicated technical features. Thus, features defined with "first" and "second" may explicitly or implicitly include one or more of the features. In the description of the embodiments of the present disclosure, the term "a plurality of" or "the plurality of" means two or more unless otherwise specified.

In the description of some embodiments, the expressions "coupled" and "connected" and derivatives thereof may be used. For example, the term "connected" may be used in the description of some embodiments to indicate that two or more components are in direct physical or electrical contact with each other. As another example, the term "coupled" may be used in the description of some embodiments to indicate that two or more components are in direct physical or electrical contact. However, the term "coupled" or "communicatively coupled" may also mean that two or more components are not in direct contact with each other, but still cooperate or interact with each other. The embodiments disclosed herein are not necessarily limited to the context herein.

The phrase "at least one of A, B and C" has the same meaning as the phrase "at least one of A, B or C", and they both include following combinations of A, B and C: only A, only B, only C, a combination of A and B, a combination of A and C, a combination of B and C, and a combination of A, B and C.

The phrase "A and/or B" includes following three combinations: only A, only B, and a combination of A and B.

The use of "applicable to" or "configured to" herein indicates an open and inclusive expression, which does not exclude devices that are applicable to or configured to perform additional tasks or steps.

The term such as "about", "substantially" or "approximately" as used herein includes a stated value and an average value within an acceptable range of deviation of a particular value. The acceptable range of deviation is determined by a person of ordinary skilled in the art, considering measurement in question and errors associated with measurement of a particular quantity (i.e., limitations of a measurement system).

As used herein, the terms "parallel", "perpendicular" and "equal" include the stated conditions and the conditions similar to the stated conditions, and the range of the similar conditions is within an acceptable range of deviation, where the acceptable range of deviation is determined by a person of ordinary skill in the art in consideration of the measurement in question and errors associated with the measurement of a specific quantity (i.e., the limitation of the measurement system). For example, the term "parallel" includes absolute parallelism and approximate parallelism, and an acceptable range of deviation of the approximate parallelism may be a deviation within 5°; the term "perpendicular" includes absolute perpendicularity and approximate perpendicularity, and an acceptable range of deviation of the approximate perpendicularity may also be a deviation within 5°; and the term "equal" includes absolute equality and approximate equality, and an acceptable range of deviation of the approximate equality may be that a difference between two equals is less than or equal to 5% of either of the two equals.

Some embodiments of the present disclosure provide an air conditioner.

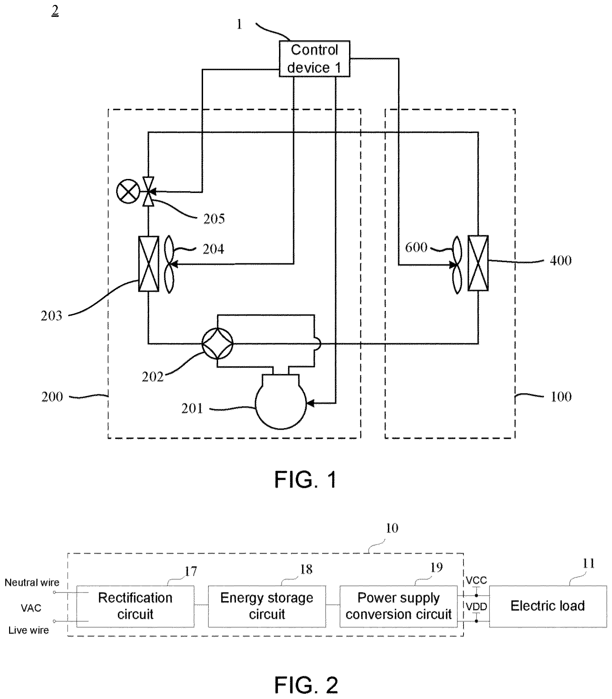

As shown in FIG. 1, the air conditioner 2 includes an air conditioner indoor unit 100 and an air conditioner outdoor unit 200. The air conditioner indoor unit 100 and the air conditioner outdoor unit 200 are connected by pipes to convey refrigerant. The air conditioner indoor unit 100 includes an indoor heat exchanger 400 and an indoor fan 600. The air conditioner outdoor unit 200 includes a compressor 201, a four-way valve 202, an outdoor heat exchanger 203, an outdoor fan 204, and an expansion valve 205. The compressor 201, the outdoor heat exchanger 203, the expansion valve 205, and the indoor heat exchanger 400 that are connected in sequence form a refrigerant loop. The refrigerant circulates in the refrigerant loop and exchanges heat with air through the outdoor heat exchanger 203 and the indoor heat exchanger 400, so as to realize a cooling mode or a heating mode of the air conditioner 2.

The compressor 201 is configured to compress the refrigerant, so that a low-pressure refrigerant is compressed to be a high-pressure refrigerant.

The outdoor heat exchanger 203 is configured to exchange heat between outdoor air and the refrigerant conveyed in the outdoor heat exchanger 203. For example, the outdoor heat exchanger 203 operates as a condenser in the cooling mode of the air conditioner 2, so that the refrigerant compressed by the compressor 201 dissipates heat into the outdoor air through the outdoor heat exchanger 203 to be condensed. The outdoor heat exchanger 203 operates as an evaporator in the heating mode of the air conditioner 2, so that the decompressed refrigerant absorbs heat from the outdoor air through the outdoor heat exchanger 203 to be evaporated.

In some embodiments, the outdoor heat exchanger 203 further includes heat exchange fins, so as to enlarge a contact area between the outdoor air and the refrigerant conveyed in the outdoor heat exchanger 203, thereby improving heat exchange efficiency between the outdoor air and the refrigerant.

The outdoor fan 204 is configured to suck the outdoor air into the air conditioner outdoor unit 200 through an outdoor air inlet of the air conditioner outdoor unit 200, and send the outdoor air, after heat-exchange between the outdoor air and the outdoor heat exchanger 203, out through an outdoor air outlet of the air conditioner outdoor unit 200. The outdoor fan 204 provides power for the flow of the outdoor air.

The expansion valve 205 is connected between the outdoor heat exchanger 203 and the indoor heat exchanger 400. A pressure of the refrigerant flowing through the outdoor heat exchanger 203 and the indoor heat exchanger 400 is adjusted by an opening degree of the expansion valve 205, so that a flow of the refrigerant flowing through the outdoor heat exchanger 203 and the indoor heat exchanger 400 is adjusted. The flow and pressure of the refrigerant flowing between the outdoor heat exchanger 203 and the indoor heat exchanger 400 have influence on heat exchange performance of the outdoor heat exchanger 203 and heat exchange performance of the indoor heat exchanger 400. The expansion valve 205 may be an electronic valve. The opening degree of the expansion valve 205 is adjustable, so as to control the flow and pressure of the refrigerant flowing through the expansion valve 205.

The four-way valve 202 is connected in the refrigerant loop, and the four-way valve 202 is configured to switch a flow direction of the refrigerant in the refrigerant loop, so as to cause the air conditioner 2 to perform the cooling mode or the heating mode.

The indoor heat exchanger 400 is configured to exchange heat between indoor air and the refrigerant conveyed in the indoor heat exchanger 400. For example, the indoor heat exchanger 400 operates as an evaporator in the cooling mode of the air conditioner 2, so that the refrigerant, that has dissipated heat through the outdoor heat exchanger 203, absorbs heat from the indoor air through the indoor heat exchanger 400 to be evaporated. The indoor heat exchanger 400 operates as a condenser in the heating mode of the air conditioner 2, so that the refrigerant, that has absorbed heat through the outdoor heat exchanger 203, dissipates heat into the indoor air through the indoor heat exchanger 400 to be condensed.

In some embodiments, the indoor heat exchanger 400 further includes heat exchange fins, so as to enlarge a contact area between the indoor air and the refrigerant conveyed in the indoor heat exchanger 400, thereby improving heat exchange efficiency between the indoor air and the refrigerant.

The indoor fan 600 is configured to suck the indoor air into the air conditioner indoor unit 100 through an indoor air inlet of the air conditioner indoor unit 100, and send the indoor air, after heat-exchange between the indoor air and the indoor heat exchanger 400, out through an indoor air outlet of the air conditioner indoor unit 100. The indoor fan 600 provides power for the flow of the indoor air.

Usually, a power supply scheme of the air conditioner is to charge a capacitor with an alternating current mains power after being current-limited by a current limiting resistor and rectified by a rectification circuit, so as to obtain a stable direct current voltage; and then convert the direct current voltage into a low voltage required by operation of circuits through a power conversion circuit, and supply the low voltage to a control circuit, so that the control circuit may operate normally.

However, when the capacitor is charged, there is a certain leakage current in the capacitor since the capacitor is generally a high-voltage aluminum electrolytic capacitor. The higher the voltage, the greater the leakage current, that is, the higher the energy consumption. Therefore, the higher the input voltage through the power conversion circuit, the higher the energy consumption. The input voltage of the power conversion circuit depends on a value of an external alternating current power supply. Since the external alternating current power supply may not be adjusted, the input voltage of the power conversion circuit may not be reduced, and the energy consumption is relatively high.

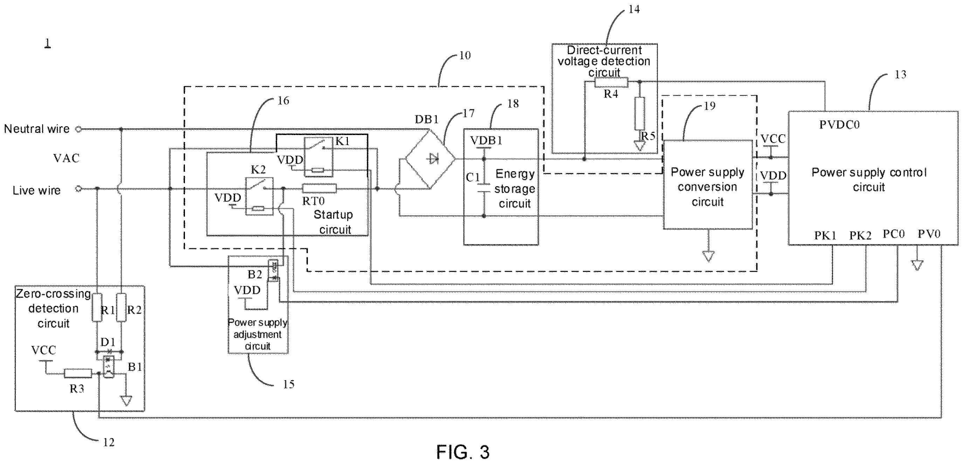

Therefore, as shown in FIGS. 1 and 2, the air conditioner 2 includes a control device 1, and the control device 1 includes a power supply circuit 10. The power supply circuit 10 is coupled to an alternating current power supply VAC and an electric load 11 (i.e., any load in the above air conditioner 2), and is configured to convert the alternating current power supply VAC (e.g., an alternating current mains power supply) into a plurality of direct current power supplies. The plurality of alternating current power supplies are used to supply power to the electric load 11. In some embodiments, as shown in FIGS. 2 and 3, the power supply circuit 10 includes a rectification circuit 17, an energy storage circuit 18, and a power conversion circuit 19. A first terminal of the rectification circuit 17 is coupled to a neutral wire of the alternating current power supply VAC, and a second terminal of the rectification circuit 17 is coupled to a live wire of the alternating current power supply VAC. The rectification circuit 17 is configured to convert the alternating current power supply VAC into a direct current electric power supply. A first terminal of the energy storage circuit 18 is coupled to a third terminal of the rectification circuit 17, and a second terminal of the energy storage circuit 18 is coupled to a fourth terminal of the rectification circuit 17. The energy storage circuit 18 is configured to convert the direct current electric power supply into a high-voltage direct current power supply. The power supply conversion circuit 19 is coupled to the energy storage circuit 18 and a power supply control circuit 13, and is configured to output the plurality of direct current power supplies to supply power to the power supply control circuit 13. For example, the plurality of direct current power supplies include a first power supply VDD and a second power supply VCC, and a power supply voltage of the second power supply VCC is lower than a power supply voltage of the first power supply VDD. The first power supply VDD and the second power supply VCC may supply power to different loads, and may also supply power to a same load in different working states.

The alternating current power supply VAC forms a full-wave rectification signal through the rectification circuit 17, and changes to a direct current electric power supply VDB1 through the energy storage circuit 18. The direct current electric power supply VDB1 is a high-voltage direct current signal, and the direct current electric power supply VDB1 generates low-voltage power supplies (i.e., the first power supply VDD and the second power supply VCC) through the power conversion circuit 19, so as to supply power to the power supply control circuit 13.

In some embodiments, as shown in FIG. 3, the power supply circuit 10 further includes a starting circuit 16. A first terminal of the starting circuit 16 is coupled to the alternating current power supply VAC, and a second terminal of the starting circuit 16 is coupled to the rectification circuit 17. The starting circuit 16 is configured to control the connection between the rectification circuit 17 and the alternating current power supply VAC to be turned on or turned off.

The starting circuit 16 includes a first relay K2, a current limiting resistor RT0 and a second relay K1. A first terminal of the first relay K2 is coupled to the live wire of the alternating current power supply VAC, a second terminal of the first relay K2 is coupled to a second terminal of a first optical coupler B2, and a control terminal of the first relay K2 is coupled to a first control terminal PK2 of the power supply control circuit 13. A first terminal of the current limiting resistor RT0 is coupled to the second terminal of the first relay K2, and a second terminal of the current limiting resistor RT0 is coupled to the second terminal of the rectification circuit 17. A first terminal of the second relay K1 is coupled to the second terminal of the current limiting resistor RT0, a second terminal of the second relay K1 is coupled to a first terminal of the first optical coupler B2, and a control terminal of the second relay K1 is coupled to a second control terminal PK1 of the power supply control circuit 13.

In some embodiments, as shown in FIG. 3, the energy storage circuit 18 includes an energy storage capacitor C1, a first terminal of the energy storage capacitor C1 is coupled to the third terminal of the rectification circuit 17, and a second terminal of the energy storage capacitor C1 is coupled to the fourth terminal of the rectification circuit 17.

In some embodiments, as shown in FIG. 2, in a case where the air conditioner 2 operates normally, the alternating current power supply VAC supplies power to the electric load 11 through the power supply circuit 10, so that the electric load 11 may perform normal operation such as starting or stopping.

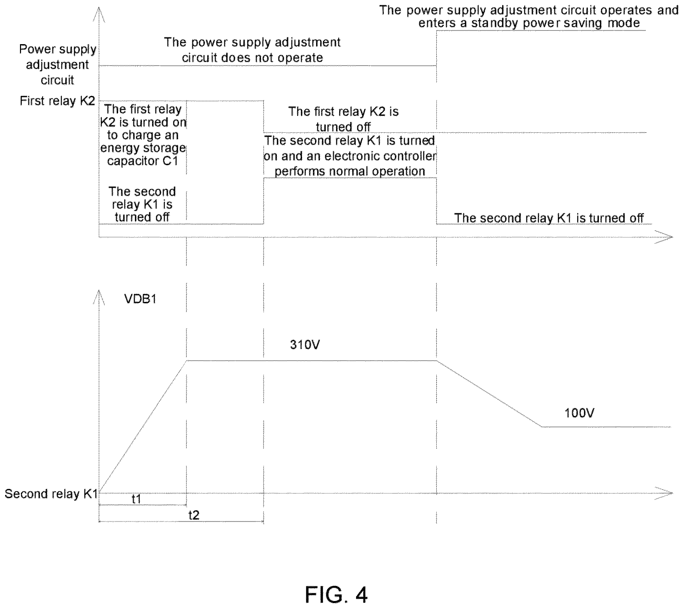

As shown in FIG. 4, before the power supply circuit 10 is energized, the first relay K2 of the starting circuit 16 is turned on, and the second relay K1 is turned off. The alternating current power supply VAC passes through the current limiting resistor RT0 and passes through the rectification circuit 17 to form the full-wave rectification signal, and then passes through the energy storage capacitor C1 of the energy storage circuit 18 to change to the direct current electric power supply VDB1. The direct current electric power supply VDB1 generates the low-voltage power supplies VCC and VDD through the power conversion circuit 19 for the power supply control circuit 13 to operate.

When the first relay K2 is turned on for a first preset time such as a time t1, it is considered that the energy storage capacitor C1 is fully charged, and a voltage of the energy storage capacitor C1 is close to a peak value. For example, in a case where the alternating current power supply VAC is at 220 V, the voltage of the energy storage capacitor C1 is 310 V when the energy storage capacitor C1 is fully charged. When the first relay K2 is turned on for a second preset time such as a time t2, the operation of the starting circuit 16 is completed, the first relay K2 is turned off, and the second relay K1 is turned on. In this case, various electric loads 11 of an electronic controller may perform normal operation such as starting or stopping.

In some embodiments, as shown in FIG. 3, the control device 1 further includes a power adjustment circuit 15 and the power supply control circuit 13. A first terminal of the power adjustment circuit 15 is coupled to the live wire of the alternating current power supply VAC, a second terminal of the power adjustment circuit 15 is coupled to the power supply circuit 10, and a third terminal of the power adjustment circuit 15 is coupled to a control terminal of the power supply control circuit 13. The power supply control circuit 13 is coupled to the power adjustment circuit 15 and the power supply circuit 10, and is configured to control a conduction angle of the power adjustment circuit 15 according to the power supply demand of the electric load 11, so as to decrease amplitude of the alternating current input to the power supply circuit 10.

The power adjustment circuit 15 includes the first optical coupler B2. The first terminal of the first optical coupler B2 is coupled to the live wire of the alternating current power supply VAC, the second terminal of the first optical coupler B2 is coupled to the power supply circuit 10 (e.g., the second terminal of the first relay K2), a third terminal of the first optical coupler B2 is coupled to a control terminal PC0 of the power supply control circuit 13, and a fourth terminal of the first optical coupler B2 is coupled to the second power supply VDD. For example, the first optical coupler B2 is an optical coupler thyristor, and the power supply control circuit 13 controls the amplitude of the alternating current power supply VAC input to the power supply circuit 10 by controlling a conduction angle of the optical coupler thyristor. In a case where the control terminal PC0 of the power supply control circuit 13 outputs a voltage control signal, the optical coupler thyristor B2 is turned on, and the alternating current power supply VAC charges the energy storage capacitor C1 through both the current limiting resistor RT0 and the rectification circuit 17 in the power supply circuit 10.

As shown in FIG. 3, in a case where the air conditioner 2 is in a standby state, the electric load 11 has a small power supply demand, that is, the electric load only needs a power supply with a low supply voltage. In a case where the air conditioner 2 is in the standby state, the first relay K2 and the second relay K1 are in turn-off states. When the control terminal PC0 of the power supply control circuit 13 outputs the voltage control signal (e.g., a trigger pulse signal), the first optical coupler B2 is turned on. Since the conduction angle of the first optical coupler B2 is controllable (i.e., the first optical coupler B2 is controlled to be turned on at any angle from 0 to 180 degrees by adding the trigger pulse signal to the third terminal of the first optical coupler B2), the amplitude of the alternating current input to the current limiting resistor RT0 will decrease after the first optical coupler B2 divides the voltage of the alternating current power supply VAC.

In some embodiments, as shown in FIG. 3, the control device 1 further includes a zero-crossing detection circuit 12 and a direct current voltage detection circuit 14.

A first terminal of the zero-crossing detection circuit 12 is coupled to the live wire of the alternating current power supply VAC, a second terminal of the zero-crossing detection circuit 12 is coupled to the neutral wire of the alternating current power supply VAC, and a third terminal of the zero-crossing detection circuit 12 is coupled to the power supply control circuit 13. The zero-crossing detection circuit 12 is configured to output a first voltage signal to the power supply control circuit 13.

In some embodiments, as shown in FIG. 3, the zero-crossing detection circuit 12 includes a first resistor R1, a second resistor R2, a first diode D1, a second optical coupler B1 and a third resistor R3. A first terminal of the first resistor R1 is coupled to the live wire of the alternating current power supply VAC, and a first terminal of the second resistor R2 is coupled to the neutral wire of the alternating current power supply VAC. A cathode of the first diode D1 is coupled to a second terminal of the first resistor R1, and an anode of the first diode D1 is coupled to a second terminal of the second resistor R2. The second optical coupler B1, a first terminal of the second optical coupler B1 is coupled to the cathode of the first diode D1, a second terminal of the second optical coupler B1 is coupled to the anode of the first diode D1, a third terminal of the second optical coupler B1 is grounded, and a fourth terminal of the second optical coupler B1 is coupled to a first signal terminal PV0 of the power supply control circuit 13. The third resistor R3, a first terminal of the third resistor R3 is coupled to the second power supply VCC, and a second terminal of the third resistor R3 is coupled to the first signal terminal PV0 of the power supply control circuit 13. After the alternating current power supply VAC is reduced in voltage and limited in current by the first resistor R1 and the second resistor R2, the alternating current power supply VAC forms an alternating current power supply zero-crossing signal through the first diode D1 and the second optical coupler B1, and the fourth terminal of the second optical coupler B1 produces the first voltage signal after being pulled up by the third resistor R3.

A first terminal of the direct current voltage detection circuit 14 is coupled to the power supply circuit 10, and a second terminal of the direct current voltage detection circuit 14 is coupled to a voltage detection terminal PVDCO of the power supply control circuit 13. The direct current voltage detection circuit 14 is configured to detect the voltage of the power supply circuit 10 and output a voltage detection signal to the power supply control circuit 13.

In some embodiments, as shown in FIG. 3, the direct current voltage detection circuit 14 includes a fourth resistor R4 and a fifth resistor R5. A first terminal of the fourth resistor R4 is coupled to the power supply circuit 10, and a second terminal of the fourth resistor R4 is coupled to the voltage detection terminal PVDCO of the power supply control circuit 13. The voltage detection terminal PVDCO is used to receive the voltage detection signal. A first terminal of the fifth resistor R5 is coupled to the second terminal of the fourth resistor R4, and a second terminal of the fifth resistor R5 is grounded. The direct current electric power supply VDB1 is a high-voltage signal, and the high-voltage signal is performed voltage-divided by the fourth resistor R4 and the fifth resistor R5 to generate a low-voltage signal, that is, the voltage detection signal. Then, the voltage detection signal is input to the power supply control circuit 13.

The power supply control circuit 13 is further configured to output a voltage control signal according to the power supply demand of the electric load 11, the first voltage signal, a target voltage signal and the voltage detection signal, so as to control the conduction angle of the power adjustment circuit 15.

As shown in FIG. 3, in a case where the air conditioner 2 is in the standby state, the alternating current power supply VAC produces the first voltage signal through the zero-crossing detection circuit 12. The direct current voltage detection circuit 14 detects the voltage of the direct current electric power supply VDB1 in the power supply circuit 10, obtains the voltage detection signal, and sends the voltage detection signal to the power supply control circuit 13. The power supply control circuit 13 outputs the voltage control signal to the power adjustment circuit 15 according to the first voltage signal, the target voltage signal and the voltage detection signal, so as to control the conduction angle of the power adjustment circuit 15.

As shown in FIGS. 3 and 4, in a case where the air conditioner 2 is in the standby state, the second relay K1 is turned off. When the voltage of the energy storage capacitor C1 is required to be a target voltage, the power supply control circuit 13 controls the conduction angle of the power adjustment circuit 15 to change by obtaining the voltage detection signal of the voltage detection signal terminal PVDCO, the voltage control signal and the first voltage signal according to the target voltage signal such as VDCOset, so as to control the magnitude of the direct current electric power supply VDB1, so that the voltage detection signal is close to the target voltage.

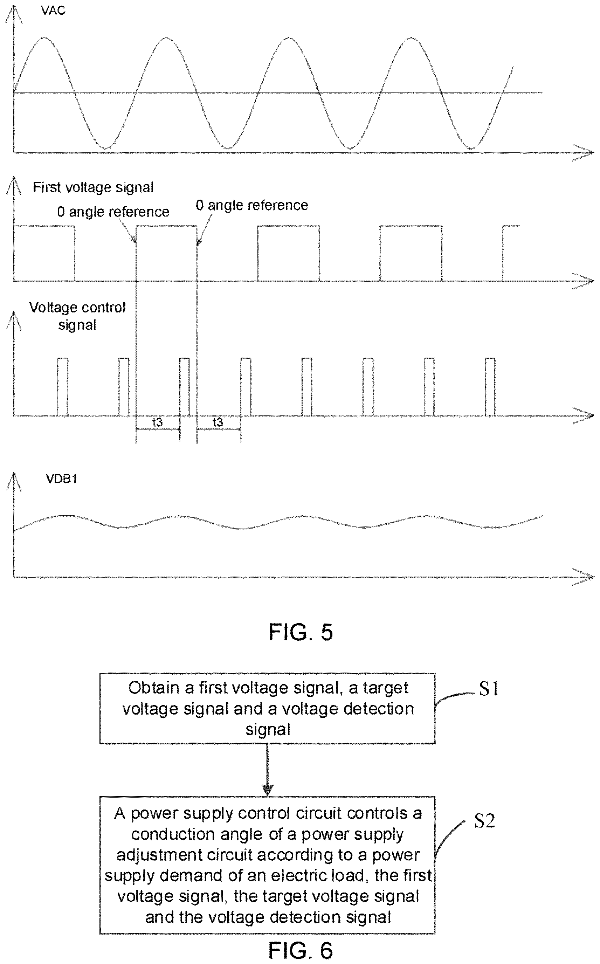

As shown in FIG. 5, a rising edge and a falling edge of the first voltage signal generated by the zero-crossing detection circuit 12 are both 0 angles of the alternating current power supply VAC, which are used to provide a reference time for the voltage control signal. The power supply control circuit 13 generates the voltage control signal according to a difference between the voltage detection signal and the target voltage signal VDCOset. In a case where the voltage detection signal is smaller than the target voltage signal VDCOset, a third preset time t3 is shorted, and the first optical coupler B2 is turned on in advance. That is, a turn-on time of the first optical coupler B2 is prolonged, so that the voltage detection signal is close to the target voltage signal VDCOset. In a case where the voltage detection signal is greater than the target voltage signal VDCOset, the third preset time t3 is prolonged, and the first optical coupler B2 is delayed to be turned on. That is, the turn-on time of the first optical coupler B2 is shortened, so that the voltage detection signal is close to the target voltage signal VDCOset. If the target voltage is set to 100 V, the conduction angle of the power adjustment circuit 15 is controlled to make the direct current electric power supply VDB1 reach 100V when the air conditioner 2 is in the standby state. Therefore, the magnitude of the alternating current input to the power supply circuit 10 may be reduced by controlling the conduction angle of the first optical coupler B2, so that different conduction angles correspond to different direct current electric power supplies VDB1. Therefore, the standby power consumption of the air conditioner may be reduced while the direct current electric power supply VDB1 is reduced.

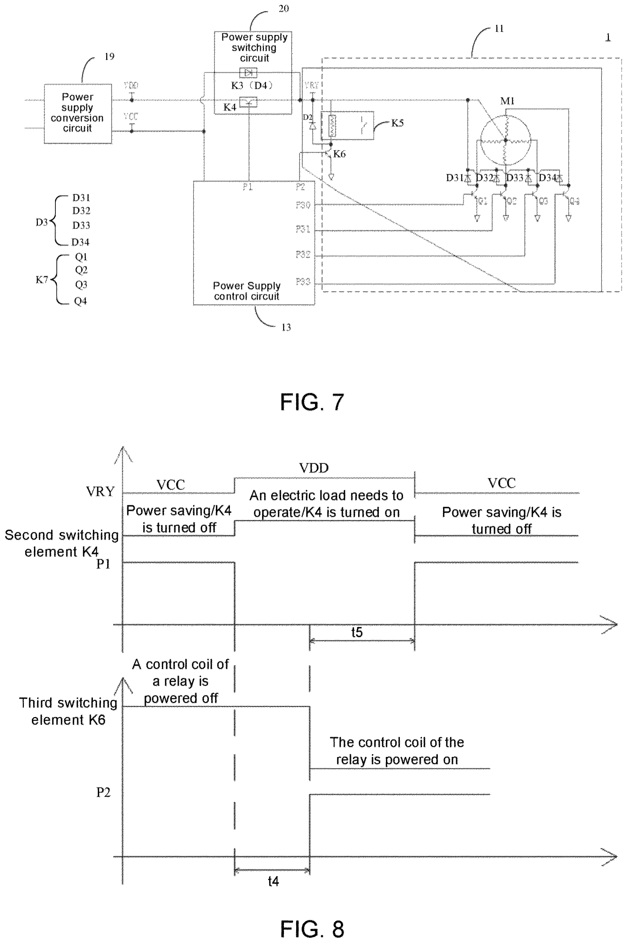

As shown in FIG. 7, the control device 1 further includes a power supply switching circuit 20 coupled to the power supply control circuit 13 and the power supply circuit 10. The power supply control circuit 13 is further configured to control the power supply control circuit 13 to switch to a direct current power supply, in the plurality of direct current power supplies, for supplying power to the electric load 11 according to the power supply demand of the electric load 11.

In some embodiments, the power supply control circuit 13 such as a microcontroller unit (MCU) outputs a second voltage signal according to the power supply demand of the electric load 11, and the power supply switching circuit 20 performs power supply switching according to the received second voltage signal, so that the plurality of direct current power supplies supply power to the electric load 11 (e.g., a third relay K5 or a motor M1). Therefore, in a case where the power supply demand of the electric load 11 varies, the power supply switching circuit 20 performs power supply switching according to the second voltage signal, so that the plurality of direct current power supplies supply power to the electric load 11, thereby avoiding the problem of high power consumption of the electric load 11 due to the use of a single power supply. Therefore, the goal of reducing power consumption will be achieved.

The power supply switching circuit 20 includes a first switching element K3 and a second switching element K4. A first terminal of the first switching element K3 is coupled to the second power supply VCC, and a second terminal of the first switching element K3 is coupled to the electric load 11. A first terminal of the second switching element K4 is coupled to the first power supply VDD, a second terminal of the second switching element K4 is coupled to the electric load 11, and a control terminal of the second switching element K4 is coupled to the power supply control circuit 13.

In some embodiments, as shown in FIG. 7, the first switching element K3 includes a fourth diode D4. An anode of the fourth diode D4 is coupled to the second power supply VCC, and a cathode of the fourth diode D4 is coupled to the electric load 11. The fourth diode D4 is a one-way switch. It can be understood that the first switching element K3 adopts the fourth diode D4, which may make the circuit control simple and reduce the cost compared with the use of a control-type switching element.

In some embodiments, in a case where the electric load 11 needs to be energized, the power supply control circuit 13 outputs the second voltage signal to control the power supply switching circuit 20 to switch the power supply. For example, the second switching element K4 is controlled to be turned on, so that the first power supply VDD supplies power to the electric load 11.

In a case where the electric load 11 does not need to be energized, the power supply control circuit 13 outputs the second voltage signal to control the power supply switching circuit 20 to switch the power supply. For example, the second switching element K4 is controlled to be turned off, so that the second power supply VCC supplies power to the electric load 11. In this case, the power supply at both ends of the electric load 11 is reduced to the second power supply VCC, thereby reducing the power consumption of the electric load 11.

In some embodiments, as shown in FIG. 7, the electric load 11 includes the third relay K5, a third switching element K6, a second diode D2 and the motor M1 (e.g., a stepping motor). A first terminal of a control coil of the third relay K5 is coupled to the second terminal of the first switch unit K3 and the second terminal of the second switching element K4. The control coil of the third relay K5 is coupled to the second power supply VCC and the first power supply VDD through the first switching element K3 and the second switching element K4, respectively. A first terminal of the third switching element K6 is coupled to a second terminal of the control coil of the third relay K5, a second terminal of the third switching element K6 is grounded, and a control terminal of the third switching element K6 is coupled to the power supply control circuit 13. A cathode of the second diode D2 is coupled to the second terminal of the second switching element K4 and the second terminal of the first switch unit K3, and an anode of the second diode D2 is coupled to the second terminal of the control coil of the third relay K5 and the first terminal of the third switching element K6. A first terminal of the motor M1 is coupled to the first terminal of the third relay K5. It can be understood that the third relay K5 requires a relatively large power to turn on the third relay K5, and only requires a very small power for maintenance after the third relay K5 is turned on. Therefore, after the third relay K5 is turned on, the power supply switching circuit 20 switches the power supply, so as to achieve the purpose of reducing power consumption.

In some embodiments, the second voltage signal includes a first voltage sub-signal and a second voltage sub-signal. In a case where the third relay K5 or the motor M1 needs to be energized, the power supply control circuit 13 outputs the first voltage sub-signal to control the second switching element K4 to be turned on, and outputs the second voltage sub-signal to control the third switching element K6 to be turned on after a fourth preset time t4. In this case, the third relay K5 is turned on, and the motor M1 is controlled to rotate.

In some embodiments, as shown in FIG. 7, the electric load 11 further includes a plurality of fourth switching elements K7 and a plurality of third diodes D3 coupled in parallel. The plurality of third diodes D3 include a first sub-diode D31, a second sub-diode D32, a third sub-diode D33 and a fourth sub-diode D34. Cathodes of the first sub-diode D31, the second sub-diode D32, the third sub-diode D33 and the fourth sub-diode D34 are coupled to the first terminal of the control coil of the third relay K5, and anodes of the first sub-diode D31, the second sub-diode D32, the third sub-diode D33 and the fourth sub-diode D34 are coupled to a second terminal of the motor M1. The plurality of fourth switching elements K7 include a first switch transistor Q1, a second switch transistor Q2, a third switch transistor Q3 and a fourth switch transistor Q4. First terminals of the first switch transistor Q1, the second switch transistor Q2, the third switch transistor Q3 and the fourth switch transistor Q4 are coupled to the anodes of the first sub-diode D31, the second sub-diode D32, the third sub-diode D33 and the fourth sub-diode D34, respectively. Second terminals of the first switch transistor Q1, the second switch transistor Q2, the third switch transistor Q3 and the fourth switch transistor Q4 are grounded.

In some embodiments, as shown in FIG. 7, the power supply control circuit 13 includes a first signal output terminal P1, a second signal output terminal P2, a third signal output terminal P30, a fourth signal output terminal P31, a fifth signal output terminal P32 and a sixth signal output terminal P33. The first signal output terminal P1 is coupled to the control terminal of the second switching element K2 to output a first control signal. The second signal output terminal P2 is coupled to the control terminal of the third switching element K6 to output a second control signal. The third signal output terminal P30 is coupled to a control terminal of the first switch tube Q1 to output a third control signal. The fourth signal output terminal P31 is coupled to a control terminal of the second switch tube Q2 to output a fourth control signal. The fifth signal output terminal P32 is coupled to a control terminal of the third switching transistor Q3 to output a fifth control signal. The sixth signal output terminal P33 is coupled to a control terminal of the fourth switching transistor Q4 to output a sixth control signal.

For example, as shown in FIGS. 7, 8 and 9, in a case where the third relay K5 or the motor M1 needs to be energized, the first signal output terminal P1 outputs the first control signal to control the second switching element K4 to be turned on, and after a fourth preset time t4, the second signal output terminal P2 is controlled to output the second control signal, the third signal output terminal P30 is controlled to output the third control signal, the fourth signal output terminal P31 is controlled to output the fourth control signal, the fifth signal output terminal P32 is controlled to output the fifth control signal, and the sixth signal output terminal P33 is controlled to output the sixth control signal. According to the above control signals, the third switching element K6 is controlled to be turned on, and then the third relay K5 is turned on, and the motor M1 rotates. In a case where the motor M1 does not need to rotate, or the third relay K5 does not need to be energized for operation, after a fifth preset time t5, the first signal output terminal P1 of the power supply control circuit 13 outputs the first control signal to control the second switching element K4 to be turned on. In this case, the third relay K5 supplies power to the motor M1 through the second power supply VCC, so as to reduce the operating voltage of the motor M1, thereby achieving the purpose of reducing power consumption.

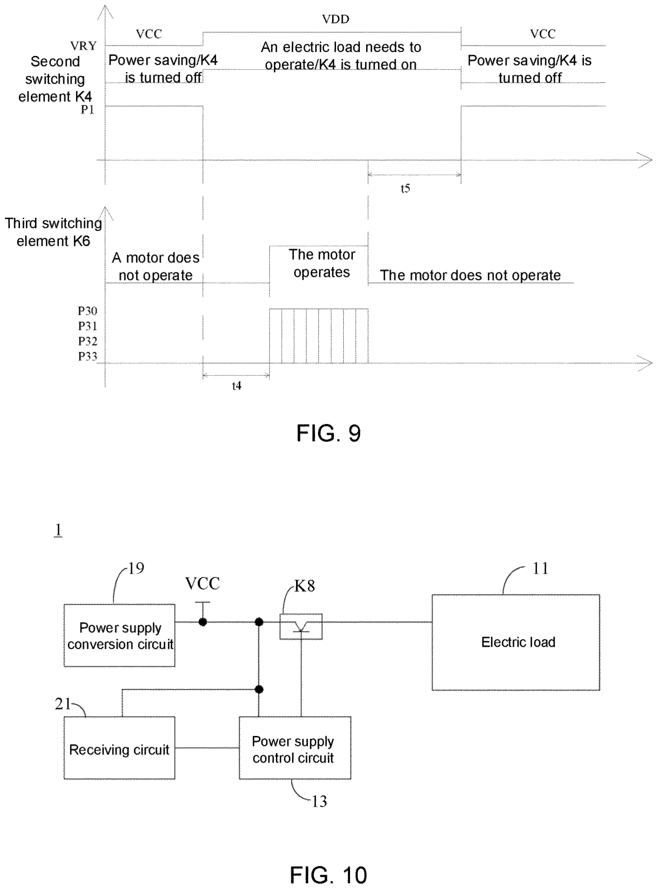

As shown in FIG. 10, the control device 1 further includes a fifth switching element K8 and a receiving circuit 21. A first terminal of the fifth switching element K8 is coupled to a direct current power supply in the plurality of direct current power supplies, a second terminal of the fifth switching element K8 is coupled to the electric load 11, and a control terminal of the fifth switching element K8 is coupled to the power supply control circuit 13. The receiving circuit 21 is coupled to the power supply control circuit 13 and is configured to receive a first instruction or a second instruction. For example, the first instruction is a sleep instruction sent by a remote control, and the second command is a wake-up instruction sent by the remote control. The power supply control circuit 13 is further configured to, according to the first instruction, output a switching control signal to control the fifth switching element K8 to be turned off, so that the air conditioner 2 enters a sleep mode, so as to stop the plurality of power supplies (e.g., the second power supply VCC) from being supplied power to the electric load 11. Alternatively, the power supply control circuit 13 is further configured to, according to the second instruction, output the switching control signal to control the fifth switching element K8 to be turned on, so that the air conditioner 2 exits the sleep mode, so as to control the plurality of power supplies to supply power to the electric load 11.

In some embodiments, when the receiving circuit 21 receives the first instruction, the receiving circuit 21 sends the first instruction to the power supply control circuit 13. The power supply control circuit 13 cuts off the power supply of the direct current power to the electric load 11 (e.g., a display circuit) after receiving the first instruction, thereby reducing the power consumption of the air conditioner 2 and saving electricity consumption.

When receiving the second instruction, the receiving circuit 21 sends the second instruction to the power supply control circuit 13, and the power supply control circuit 13 controls the plurality of power supplies to supply power to the electric load 11 (e.g., the display circuit) after receiving the second instruction, so that the air conditioner 2 exits the sleep mode.

In some embodiments, the receiving circuit 21 includes a first infrared signal receiving circuit. For example, the first infrared receiving circuit communicates with a second infrared receiving circuit in the remote control, so as to implement signal transmission between the receiving circuit 21 and the remote control. The fifth switching element K8 includes an insulated gate bipolar transistor (IGBT). The turn-on or turn-off of the IGBT is controlled by the switching control signal output by the power supply control circuit 13.

In some embodiments, in a case where the air conditioner 2 enters the sleep mode such as an idle mode and a power-off mode, the corresponding current in this mode is in a range from 2 uA to 25 uA. The first instruction includes at least one wake-up code and a data code output in sequence, so as to wake up the air conditioner 2, thereby improving the user experience.

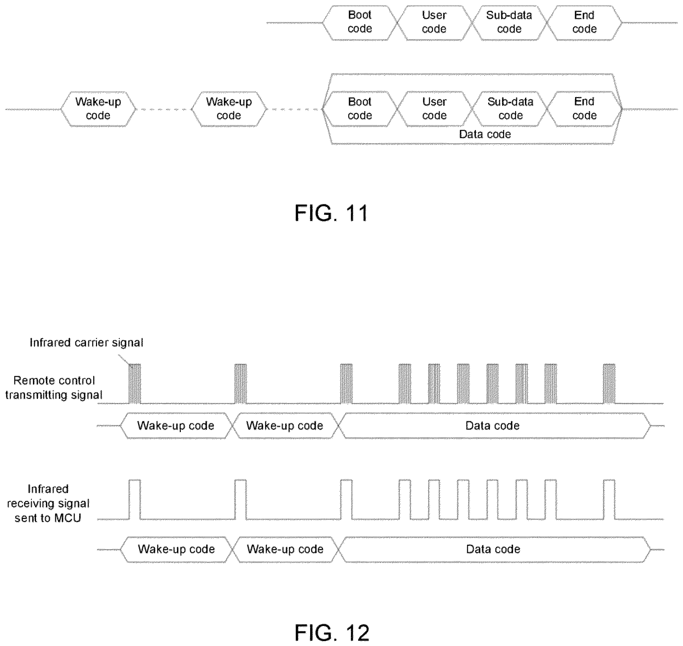

It can be seen from FIGS. 11 and 12 that the data code includes a boot code, a user code, a sub-data code and an end code. When the power supply control circuit 13 receives the data code, the power supply control circuit 13 first performs corresponding decoding, and then performs subsequent control.

When the power supply control circuit 13 receives the wake-up code(s), the power supply control circuit 13 exits the sleep state and enters the normal operation state after a sixth preset time. In this case, the power supply control circuit 13 receives the data code and then decodes the data code, so as to implement the control of the air conditioner 2, thereby improving the user experience. It can be understood that the at least one wake-up code is set. In order to improve the reliability of signal transmission, two or three wake-up codes may be set in front of the data code, and a signal duration corresponding to a single wake-up code is in a range from 10 milliseconds to 40 milliseconds.

In some embodiments, in a case where the power supply control circuit 13 is in the normal operation state, the power supply control circuit 13 will automatically ignore the wake-up code when receiving the wake-up code. Therefore, in a case where the power supply control circuit 13 is in the normal operation state, the setting of the wake-up code(s) will not affect the normal operation of air conditioner 2.

The present disclosure further provides a control method of the air conditioner 2.

As shown in FIG. 6, the control method of the air conditioner 2 includes at least steps S1 and S2.

In step S1, a first voltage signal, a target voltage signal and a voltage detection signal are obtained.

In some embodiments, in a case where the air conditioner 2 is in a standby state, an alternating current power supply VAC produces the first voltage signal through a zero-crossing detection circuit. A direct current voltage detection circuit 14 obtains the voltage detection signal by detecting a voltage of a direct current electric power supply VDB1, and sends the voltage detection signal to a power supply control circuit 13.

In step S2, the power supply control circuit 13 controls a conduction angle of a power adjustment circuit 15 according to a power supply demand of an electric load 11, the first voltage signal, the target voltage signal and the voltage detection signal.

In some embodiments, the power supply control circuit 13 outputs a voltage control signal to the power adjustment circuit 15 according to the first voltage signal, the target voltage signal and the voltage detection signal.

The above are only specific embodiments of the present disclosure, but the scope of protection of the present disclosure is not limited thereto, and any person skilled in the art may conceive of variations or replacements within the technical scope of the present disclosure, which shall fall within the protection scope of the present disclosure. Therefore, the protection scope of the present disclosure should be determined by the protection scope of the claims.

## Claims

1. An air conditioner, comprising:
a power supply circuit coupled to an electric load and configured to convert an alternating current power supply into a plurality of direct current power supplies; the plurality of direct current power supplies being used for supplying power to the electric load;
a power adjustment circuit coupled to the power supply circuit; and
a power supply control circuit coupled to the power adjustment circuit and the power supply circuit, and configured to control a conduction angle of the power adjustment circuit according to a power supply demand of the electric load, so as to decrease amplitude of an alternating current input to the power supply circuit.

2. The air conditioner according to claim 1, wherein
the power supply circuit includes:
a first relay, a first terminal of the first relay being coupled to a live wire of the alternating current power supply, and a control terminal of the first relay being coupled to the power supply control circuit;
a current limiting resistor, a first terminal of the current limiting resistor being coupled to a second terminal of the first relay; and
a second relay, a first terminal of the second relay being coupled to a second terminal of the current limiting resistor; and
the power adjustment circuit includes:
a first optical coupler, a first terminal of the first optical coupler being coupled to a second terminal of the second relay and the live wire of the alternating current power supply, a second terminal of the first optical coupler being coupled to the second terminal of the first relay, a third terminal of the first optical coupler being coupled to a control terminal of the power supply control circuit, and a fourth terminal of the first optical coupler being coupled to a first power supply; the plurality of direct current power supplies including the first power supply.

3. The air conditioner according to claim 1, further comprising:
a zero-crossing detection circuit, a first terminal of the zero-crossing detection circuit being coupled to a live wire of the alternating current power supply, a second terminal of the zero-crossing detection circuit being coupled to a neutral wire of the alternating current power supply, and a third terminal of the zero-crossing detection circuit being coupled to the power supply control circuit; the zero-crossing detection circuit being configured to output a first voltage signal to the power supply control circuit; and
a direct current voltage detection circuit, a first terminal of the direct current voltage detection circuit being coupled to the power supply circuit, and a second terminal of the direct current voltage detection circuit being coupled to the power supply control circuit; the direct current voltage detection circuit being configured to detect a voltage of the power supply circuit and output a voltage detection signal to the power supply control circuit; wherein
the power supply control circuit is further configured to control the conduction angle of the power adjustment circuit according to the power supply demand of the electric load, the first voltage signal, the voltage detection signal and a target voltage signal.

4. The air conditioner according to claim 3, wherein the zero-crossing detection circuit includes:
a first resistor, a first terminal of the first resistor being coupled to the live wire of the alternating current power supply;
a second resistor, a first terminal of the second resistor being coupled to the neutral wire of the alternating current power supply;
a first diode, a cathode of the first diode being coupled to a second terminal of the first resistor, and an anode of the first diode being coupled to a second terminal of the second resistor;
a second optical coupler, a first terminal of the second optical coupler being coupled to the cathode of the first diode, a second terminal of the second optical coupler being coupled to the anode of the first diode, a third terminal of the second optical coupler being grounded, and a fourth terminal of the second optical coupler being coupled to a first signal terminal of the power supply control circuit; and
a third resistor, a first terminal of the third resistor being coupled to a second power supply, and a second terminal of the third resistor being coupled to the first signal terminal of the power supply control circuit; the plurality of direct current power supplies including the second power supply.

5. The air conditioner according to claim 3, wherein the direct current voltage detection circuit includes:
a fourth resistor, a first terminal of the fourth resistor being coupled to the power supply circuit, and a second terminal of the fourth resistor being coupled to a voltage detection terminal of the power supply control circuit; the voltage detection terminal being used to receive the voltage detection signal; and
a fifth resistor, a first terminal of the fifth resistor being coupled to the second terminal of the fourth resistor, and a second terminal of the fifth resistor being grounded.

6. The air conditioner according to any one of claims 1 to 5, further comprising a power supply switching circuit coupled to the power supply control circuit and the power supply circuit; wherein
the power supply control circuit is further configured to control the power supply switching circuit to switch to a direct current power supply, in the plurality of direct current power supplies, for supplying power to the electric load according to the power supply demand of the electric load.

7. The air conditioner according to claim 6, wherein
the plurality of direct current power supplies includes a first power supply and a second power supply;
the power supply switching circuit includes:
a first switching element, a first terminal of the first switching element being coupled to the second power supply, and a second terminal of the first switching element being coupled to the electric load; and
a second switching element, a first terminal of the second switching element being coupled to the first power supply, a second terminal of the second switching element being coupled to the electric load, and a control terminal of the second switching element being coupled to the power supply control circuit.

8. The air conditioner according to claim 6 or 7, wherein the electric load includes:
a third relay, a first terminal of the third relay being coupled to a second terminal of a first switching element and a second terminal of a second switching element; and
a third switching element, a first terminal of the third switching element being coupled to a second terminal of the third relay, a second terminal of the third switching element being grounded, and a control terminal of the third switching element being coupled to the power supply control circuit.

9. The air conditioner according to claim 8, further comprising:
a second diode, a cathode of the second diode being coupled to the second terminal of the second switching element and the second terminal of the first switching element, and an anode of the second diode being coupled to a second terminal of the third relay and the first terminal of the third switching element.

10. The air conditioner according to claim 8, wherein the electric load further includes:
a motor, a first terminal of the motor being coupled to the first terminal of the third relay;
a plurality of third diodes, the plurality of third diodes being coupled in parallel; cathodes of the plurality of third diodes being coupled to the first terminal of the third relay, anodes of the plurality of third diodes being coupled to a second terminal of the motor; and
a plurality of fourth switching elements, first terminals of the plurality of fourth switching elements being respectively coupled to the anodes of the plurality of third diodes, second terminals of the plurality of fourth switching elements being grounded, and control terminals of the plurality of fourth switching elements being coupled to the power supply control circuit.

11. The air conditioner according to claim 7, wherein the first switching element includes a fourth diode, an anode of the fourth diode being coupled to the second power supply, and a cathode of the fourth diode being coupled to the electric load.

12. The air conditioner according to any one of claims 1 to 5, further comprising a fifth switching element, a first terminal of the fifth switching element being coupled to a direct current power supply in the plurality of direct current power supplies, a second terminal of the fifth switching element being coupled to the electric load, and a control terminal of the fifth switching element being coupled to the power supply control circuit.

13. The air conditioner according to claim 12, wherein the fifth switching element is an insulated gate bipolar transistor.

14. The air conditioner according to claim 12, further comprising:
a receiving circuit coupled to the power supply control circuit and configured to receive a first instruction or a second instruction; wherein
the power supply control circuit is further configured to control the fifth switching element to be turned on according to the first instruction, and control the fifth switching element to be turned off according to the second instruction.

15. The air conditioner according to claim 14, wherein the first instruction includes at least one wake-up code and a data code sequentially output.

16. The air conditioner according to claim 14, wherein the receiving circuit includes:
a first infrared signal receiving circuit coupled to the power supply control circuit and configured to receive the first instruction or the second instruction.

17. The air conditioner according to any one of claims 1 to 5, wherein the power supply control circuit includes:
a rectification circuit, a first terminal of the rectification circuit being coupled to a neutral wire of the alternating current power supply, and a second terminal of the rectification circuit being coupled to a live wire of the alternating current power supply;
an energy storage circuit, a first terminal of the energy storage circuit being coupled to a third terminal of the rectification circuit, and a second terminal of the energy storage circuit being coupled to a fourth terminal of the rectification circuit; and
a power supply conversion circuit coupled to the energy storage circuit and the power supply control circuit, and configured to output the plurality of direct current power supplies.

18. The air conditioner according to claim 17, wherein the energy storage circuit includes:
an energy storage capacitor, a first terminal of the energy storage capacitor being coupled to the third terminal of the rectification circuit, and a second terminal of the energy storage capacitor being coupled to the fourth terminal of the rectification circuit.

19. A control method of an air conditioner, the air conditioner including:
a power supply circuit coupled to an electric load and configured to convert an alternating current power supply into a plurality of direct current power supplies; the plurality of direct current power supplies being used for supplying power to the electric load;
a power adjustment circuit coupled to the power supply circuit; and
a power supply control circuit coupled to the power adjustment circuit and the power supply circuit;
the control method of the air conditioner comprising:
controlling, by the power supply control circuit, a conduction angle of the power adjustment circuit according to a power consumption supply of the electric load, so as to decrease amplitude of an alternating current input to the power supply circuit.

20. The control method of the air conditioner according to claim 19, wherein the air conditioner further includes:
a zero-crossing detection circuit, a first terminal of the zero-crossing detection circuit being coupled to a live wire of the alternating current power supply, a second terminal of the zero-crossing detection circuit being coupled to a neutral wire of the alternating current power supply, and a third terminal of the zero-crossing detection circuit being coupled to the power supply control circuit; the zero-crossing detection circuit being configured to output a first voltage signal to the power supply control circuit; and
a direct current voltage detection circuit, a first terminal of the direct current voltage detection circuit being coupled to the power supply circuit, and a second terminal of the direct current voltage detection circuit being coupled to the power supply control circuit; the direct current voltage detection circuit being configured to detect a voltage of the power supply circuit and output a voltage detection signal to the power supply control circuit;
the control method of the air conditioner further comprises:
controlling, by the power supply control circuit, the conduction angle of the power adjustment circuit according to the power supply demand of the electric load, the first voltage signal, the voltage detection signal and a target voltage signal.
